# EUROPEAN PATENT SPECIFICATION

(11) **EP 2 305 448 B1**
(45) Date of publication and mention of the grant of the patent: **12.09.2018**
(21) Application number: 09800534.1
(22) Date of filing: 16.07.2009
(51) Int. Cl.: B29C 47/00, B29C 47/38, B29C 47/60, B29C 47/64

(54) **CONTINUOUS EXTRUDER**
KONTINUIERLICHER EXTRUDER
EXTRUDEUSE EN CONTINU

(30) Priority: 22.07.2008 KR 20080071047
(43) Date of publication of application: 06.04.2011
(73) Proprietor: Shinil Chemical Industry Co., Ltd. Ok, Gyeonggi-do 425-836 (KR)
(72) Inventor: SEO, Keum-Suk, Ansan-si Gyeonggi-do 426-170 (KR); NAM, Byeong-Uk, Asan-si Chungcheongnam-do 336-851 (KR); HUSSAIN, Manwar, Ansan-si Gyeonggi-do 425-836 (KR); YANG, Keum Ho, Bucheon-si Gyeonggi-do 421-170 (KR)
(74) Representative: Isarpatent
(86) International application number: PCT/KR2009/003926
(87) International publication number: WO 2010/011053

(56) References cited:
- DE-A1- 3 205 428
- GB-A- 1 007 140
- GB-A- 1 012 766
- JP-A- 7 117 052
- JP-A- H0 262 222
- JP-A- 2002 144 407
- JP-A- 2004 181 840
- JP-A- 2004 202 871
- KR-B1- 100 770 804
- KR-B1- 910 005 173
- US-A- 4 797 242

## Description

### [Technical Field]

The present invention relates to a continuous extruder according to claim 1, and more particularly, to a continuous extruder which is capable of in-situ processing of mixing, melting, compression, dispersion, and metering without an additional extruder, and effectively exfoliating and dispersing a layered material such as clay into a polymer resin without additives such as a surfactant, a dispersing agent, an antioxidant, and a coupling agent.

### [Background Art]

It is difficult for single composition polymer to meet performance requirements in polymer materials. Therefore, polymer blend composition is manufactured by melt-mixing with other materials.

The production of the polymer blend composition, however, requires steps of melting and mixing of a thermoplastic resin. Unfortunately, it is not easy to mix polymeric materials due to melting temperature difference, causing poor viscosity control, between the thermoplastic resin and other materials. In addition, it is difficult to disperse the melt-mixed materials due to differences in polarity and interfacial tension, often resulting in phase separation, caused by their chemical mismatch. In order to prevent such phase separation, various polymer blend compositions are prepared by adding an additive such as a dispersing agent or a surfactant.

In general, for melt processing of a polymer, it uses a single screw extruder as disclosed in US 4 797 242 A or a twin-screw extruder in a screw extruding method. For overcoming poor mixing and providing homogeneous melt, the screw extruding method involves force melt-mixing of materials with (intermeshing) screw element.

US Patent No. 6,770,340 discloses "Chaotic Mixing Method and Structured Materials Formed Therefrom," which provides a method of manufacturing polymer blend compositions by three processing units; an extruder for extruding a polymer resin, a extruder for extruding materials other than the polymer resin, and a mixer for mixing the materials extruded by two extruders.

Unfortunately, the method described above requires at least two extruders for blending and dispersing other materials to the polymer resin; an extruder for pumping the polymer resin, another extruder for pumping other material. Besides the extruders, an independent mixer is required to mix or disperse the extruded polymer resin and the extruded other material. In addition to the difficulties encountered in independent melting, blending, and mixing, discontinuous steps are time-consuming.

### [Disclosure]

### [Technical Problem]

In order to solve the described above and/or other problems, the present invention is to provide a continuous extruder which is capable of in-situ processing of mixing, melting, compression, dispersion, and metering without an additional extruder, and exfoliating and dispersing a layered material such as clay into a polymer resin without additives such as a surfactant, a dispersing agent, an antioxidant, and a coupling agent.

### [Technical Solution]

The foregoing and/or other aspects of the present invention can be achieved by utilizing a continuous extruder in which a melting and compression zone has a shaft structure of spiral screw shape, and is configured to melt and compress polymer resin and other additive material that are fed through a hopper; and a dispersion zone is configured to convey the molten and compressed material to a metering zone while dispersing the additive material into the polymer resin by the actions of compression and shear stress; and an extrusion die is configured to discharge a polymer composition in which the additive material is dispersed into the polymer resin. The dispersion zone has a shaft structure including at least an upwardly-tapered compression section and a straight shearing section set next to the upwardly-tapered compression section, and the ratio of length-to-diameter ratio of the shaft in the dispersion zone ranges from 20 to 60, and that the spiral screw shape has a constant pitch first and then gradually narrowing pitch according to claim 1.

A taper angle of the upwardly-tapered compression section may range from 1 to 40°.

A clearance between the cylinder wall and the tip of shaft in the dispersion zone may range from 1/20 to 1/60 of the shaft diameter.

A clearance between the cylinder wall and the tip of the straight shearing section in the dispersion zone, which is closest to the cylinder wall, may range from 1/40 to 1/60 of the shaft diameter.

In order to build up the shear stress gradually along the shaft, the shaft in the dispersion zone may have a stair-like structure in which the upwardly-tapered compression section and the straight shearing section are repeated more than once.

The shaft in the dispersion zone may further comprise a straight shearing section before the upwardly-tapered compression section such that the shaft can be configured in order of the straight shearing section, the upwardly-tapered compression section, and the straight shearing section.

The diameter of the shaft in the straight shearing section may deviate 5 % or less.

The shaft in the dispersion zone may further comprise a downwardly-tapered decompression (releasing) section such that the shaft can be configured in order of the upwardly-tapered compression section, the straight shearing section, and the downwardly-tapered decompression section.

The shaft in the dispersion zone may further comprise a straight shearing section set before the upwardly-tapered compression section or after a downwardly-tapered decompression section.

The shaft in the dispersion zone may further comprise a downwardly-tapered decompression section such that the shaft can be configured with more than one repetition of the upwardly-tapered compression section, the straight shearing section, and the downwardly-tapered decompression section.

The taper angle of the downwardly-tapered decompression section may range from -1 to -40°.

The length-to-diameter ratio of the spiral screw in the melting and compression zone may range from 20 to 40.

A helix angle of the spiral screw in the melting and compression zone may range from 20 to 60°, and a clearance between a flight of the spiral screw and the cylinder wall may range from 1/40 to 1/60 of the diameter of the shaft. The pitch of the spiral screw may range from 3 to 15 cm.

The continuous extruder may further include a metering zone having a shaft structure of a spiral screw shape, which is configured to discharge a dispersed polymer composition to the extrusion die.

The length-to-diameter ratio of the spiral screw in the metering zone may range from 20 to 40.

A helix angle of the spiral screw in the metering zone may range from 20 to 60°. A clearance between a flight of the spiral screw and the cylinder wall in the metering zone may range from 1/40 to 1/60 of the shaft diameter. The pitch of the spiral screw in the metering zone may range from 3 to 15 cm.

The continuous extruder may further comprise a kneading zone having a stair-like kneading screw formed in the direction perpendicular to the axis of the shaft, and having a structure in which the stair-like kneading screw is repeated at a predetermined pitch.

The kneading zone may be formed of a screw in which the first kneading disc element, the second kneading disc element one step higher than the first kneading disc element, and the third kneading disc element one step higher than the second kneading disc element are set in a stair-like shape. The screw may be repeated at a predetermined pitch.

The continuous extruder may further comprise a side-feeding port set to feed secondary material by a side-feeding method into a polymer composition melt in the dispersion zone that is compressed during mixing.

### [Advantageous Effects]

With the continuous extruder of the present invention, it is possible to perform in-situ processing of mixing, melting, compression, dispersion, and metering of materials without an extra extruder.

In addition, a layered material such as clay can be effectively exfoliated and dispersed in the polymer resin without adding extra additives such as a surfactant, a dispersing agent, an antioxidant, and a coupling agent.

Furthermore, to suppress phase separation, it may be fed into a molten polymer composition through a side-feeding port for a material having phase separation with the polymer resin due to differences in chemical structure, polarity, surface tension, and so on, such that the polymer composition has enhanced electrical conductivity and mechanical properties.

### [Brief Description of The Drawings]

A full and enabling disclosure of the present invention, including the best mode thereof to one of ordinary skill in the art, is set forth more particularly in the remainder of the specification, including reference to the accompanying drawings in which:
FIG. 1 is a schematic view of a continuous single-screw extruder in accordance with a preferred embodiment of the present invention;
FIG. 2 is a schematic view of a continuous twin-screw extruder in accordance with a preferred embodiment of the present invention;
FIG. 3 is a drawing of a shaft and a cylinder in detail, excluding heating units from the continuous twin-screw extruder in accordance with a preferred embodiment of the present invention;
FIGS. 4-8 are drawings of cylinders and shafts in detail of continuous twin-screw extruders according to various examples of the present invention;
FIGS. 9-11 are drawings of various examples of shafts of the continuous twin-screw extruder;
FIG. 12 is a view illustrating a screw shaft of a melting and compression zone in detail;
FIG. 13 is a view showing a stair-like screw of a kneading zone in detail;
FIG. 14 is a view showing a portion of a shaft of a dispersion zone in detail; and
FIGS. 15-18 are views showing shafts of the continuous single-screw extruder according to various examples in detail.

### <Description of Important Reference Number>

| | |
|---|---|
| 110: Hopper | 120: Shaft |
| 130: Cylinder | 140a, 140b, 140c: Driving units |
| 150: Heating elements | 160: Extrusion die |
| 155: Cooling pans | 165: Cooling pipe |
| 180: Frame | 190: Vent port |

### [DETAILED DESCRIPTION OF THE PREFFERED EMBODIMENTS]

Reference will now be made in detail to the embodiments of the present invention, examples of which are illustrated in the accompanying drawings. In fact, it will be apparent to those skilled in the art that the following embodiments can be readily understood and modified into various types, and the scope of the present invention is not limited to the embodiments. Like numbers refer to like elements throughout the specification.

A continuous extruder in accordance with an exemplary embodiment of the present invention may be a continuous single-screw extruder or a continuous twin-screw extruder.

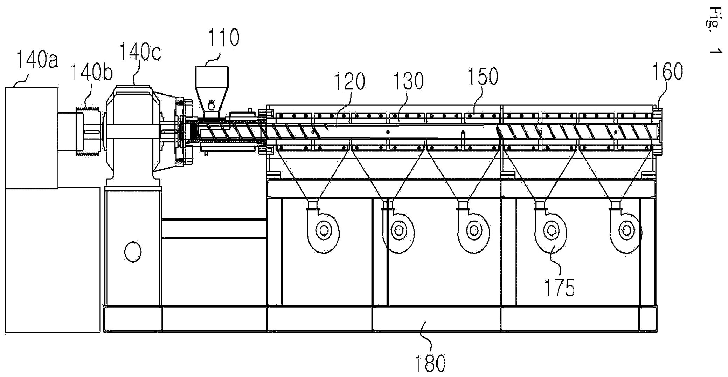

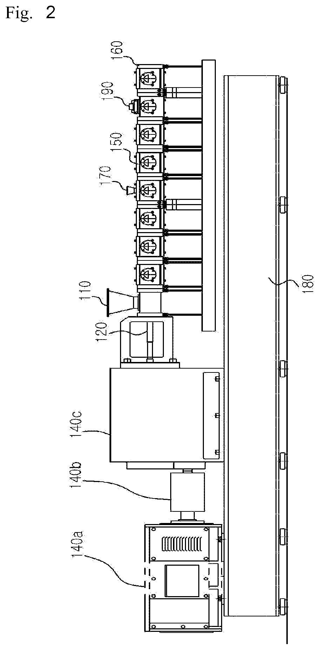

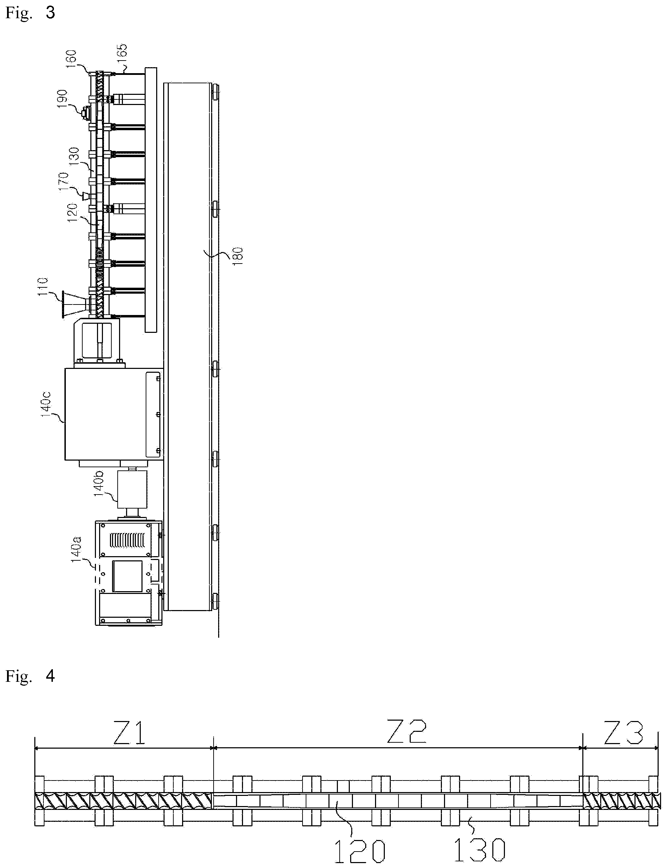

FIGS. 1 to 3 are schematic views for explaining a continuous extruder in accordance with a preferred embodiment of the present invention; FIG. 1 showing a continuous single-screw extruder in accordance with a preferred embodiment of the present invention, FIG. 2 showing a continuous twin-screw extruder in accordance with a preferred embodiment of the present invention, and FIG. 3 showing a shaft and a cylinder in detail in the continuous twin-screw extruder by excluding heating units.

Referring to FIG. 1, the continuous single-screw extruder in accordance with a preferred embodiment of the present invention includes a hopper 110 for supplying a primary material; a shaft 120 which is rotatable; a cylinder 130 surrounding the shaft 120; a driving unit 140a, 140b and 140c for rotating the shaft 120; a heating units (heater) 150 for heating the interior of the cylinder 130; a control panel (not shown) for controlling a temperature of the heating units 150; and an extrusion die 160 for discharging a polymer composition.

Referring to FIGS. 2 and 3, the continuous twin-screw extruder in accordance with a preferred embodiment of the present invention includes a hopper 110 for supplying a primary material; two shafts 120 which are rotatable; a cylinder 130 surrounding the two shafts 120; driving units 140a, 140b and 140c for rotating the shafts 120; a heating unit 150 for heating the interior of the cylinder 130; a control panel (not shown) for controlling a heating temperature of the heating unit 150; an extrusion die 160 for discharging a polymer composition; and a side-feeding port 170 for supplying a secondary material into the polymer composition in the process of dispersion through melting and mixing. Axial distance of the two shafts, e.g., 3 to 10 cm, may be determined in consideration of the diameter of the shaft 120, the level of applied shear stress, a conveying rate in a melting and dispersion zone, an extrusion speed, a throughput of a metering zone, and so on.

In FIGS. 1 to 3, reference number 155 designates a cooling pan for blowing air to control temperature in the cylinder of the continuous single-screw extruder; reference number 165 designates a cooling pipe through which cooling water flows to control temperature in the cylinder of the continuous twin-screw extruder; reference number 180 designates a base frame for supporting the continuous extruder; and reference number 190 designates a vent port for discharging volatile.

Hereinafter, the continuous extruder in accordance with a preferred embodiment of the present invention will be described in more detail.

The driving unit140a, 140b and 140c includes a motor 140a for rotating the shaft 120, a coupling part 140b connected to the motor to transmit power of the motor to a gear part 140c, and the gear part 140c for rotating the shaft 120 via a gear transmitted the driving power of the motor. The shaft 120 driven by the driving unit 140a, 140b and 140c is rotated in a certain direction (for example, clockwise) to apply shear stress to a molten polymer blend. A rotational speed of the shaft 120 may range 100 to 400 rpm, which may be controlled by a speed control panel.

The heating unit 150 may consist of multiple heaters, depending on a supplying zone to a metering zone (e.g., 7 to 10 units) to control temperature in the cylinder 130. The temperature in the cylinder 130 can be controlled by the heating unit 150 within a range of 100 to 350 °C, and internal temperature in the continuous extruder (internal temperature in the cylinder) may be adequately controlled, depending on polymer resin type in the processing. For example, the melting and compression zone of the continuous extruder for melting the polymer resin after supplied into the hopper 110 may be maintained at a temperature (e.g., 240 to 250 °C) higher than the melting temperature of the polymer resin; the temperature of the cylinder 130 after the melting and compression of the polymer resin may be set to a predetermined temperature (e.g., 190 to 240 °C) along the dispersion zone of an extruder; and the temperature of the cylinder 130 at the metering zone of the extruder may be maintained at a temperature (e.g., 240 to 250 °C) higher than the temperature of the dispersion zone.

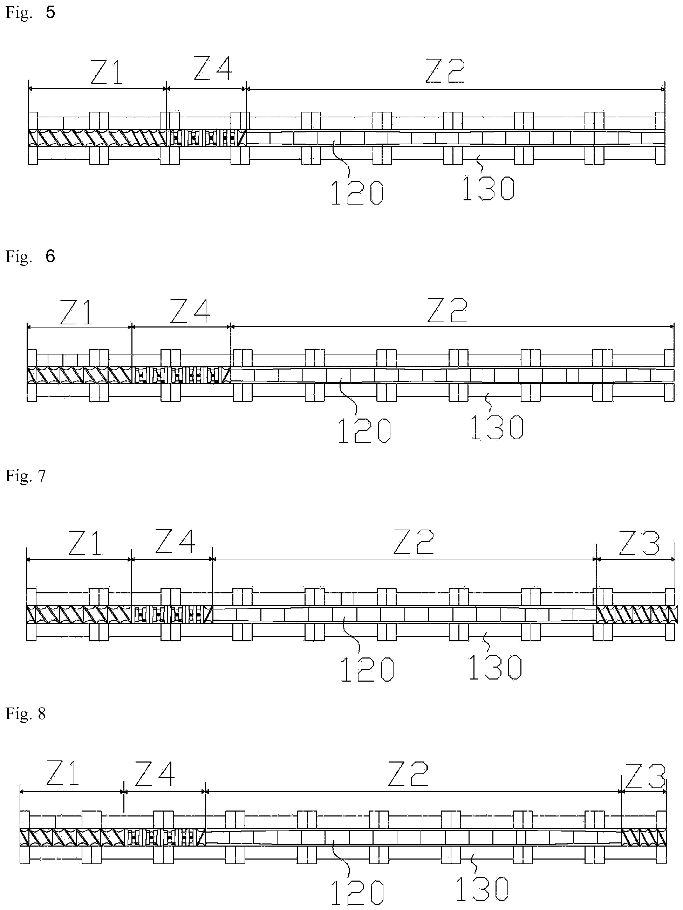

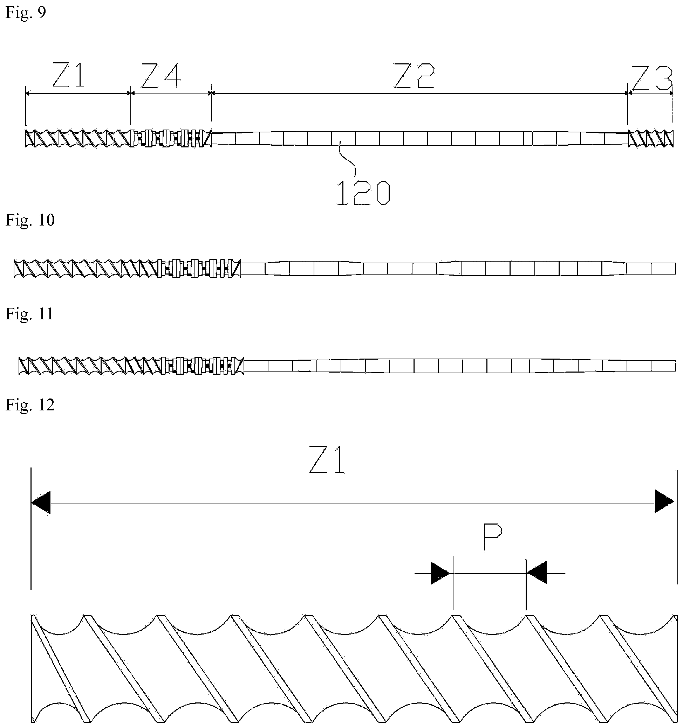

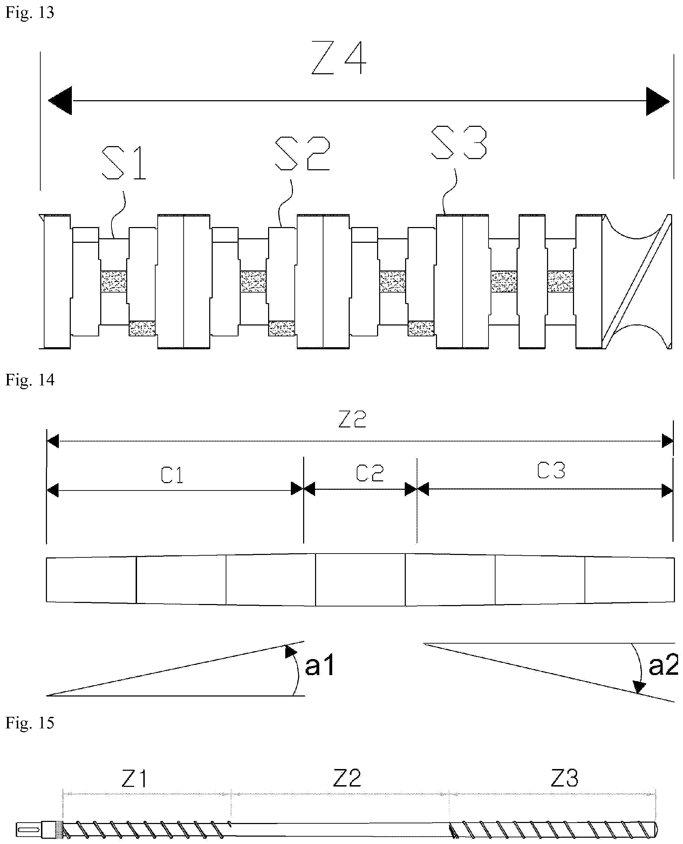

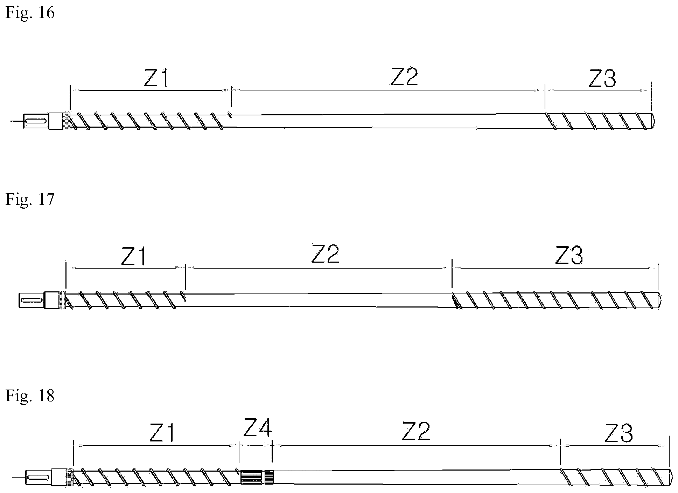

FIGS. 4 to 8 are drawings in detail illustrating cylinders and shafts of a continuous twin-screw extruder according to various examples. FIGS. 9 to 11 are drawings illustrating various examples of shafts of a continuous twin-screw extruder. FIG. 12 is a drawing in detail illustrating a screw shaft of a melting and compression zone. FIG. 13 is a drawing in detail illustrating a stair-like screw of a kneading zone. FIG. 14 is a drawing in detail illustrating a portion of a shaft of a dispersion zone. And FIGS. 15 to 18 are drawings illustrating shafts of the continuous single-screw extruder according to various examples.

Referring to FIGS. 4 to 18, the continuous extruder in accordance with a preferred embodiment of the present invention may be divided into three zones, depending on operational functions; for example, a melting and compression zone Z1 for melting and compressing the materials fed from the hopper 110; a dispersion zone Z2 for conveying the molten and compressed mixture to an extrusion zone Z3 with applying compressing and shearing actions while dispersing a layered material (e.g., clay) into a polymer matrix resin; and the metering zone Z3 for discharging the dispersed polymer composition to the extrusion die 160.

The polymer resin fed from the hopper 110 is gradually heated to a certain temperature, and starts to melt. When the polymer resin is fed from the hopper 110 and the polymer resin starts to melt, two phases exist first, i.e., a solid resin and a molten liquid resin. And then complete melting can be achieved after passing through the melting and compression zone Z1. The shaft 120 of the melting and compression zone Z1 has a spiral screw shape to mix and compress the material fed from the hopper 110 and to push forward the material into the dispersion zone Z2. Helix angle of the spiral screw may be 20 to 60°, depending on a material feeding rate, viscosity, compression force, and so on. The clearance between the flight of the spiral screw and the cylinder 130 may be set to 1/40 to 1/60 of the diameter of the shaft by accounting a material feeding rate, melt viscosity, compression force, and so on. Pitch P of the spiral screw, , e.g., 3∼15 cm, may be determined by accounting a material feeding rate, compression force, melt viscosity of the material, and so on.

The material is compressed by rotation of the shaft 120 having the spiral screw shape so that volume and porosity of the materials are reduced. The spiral screw have a constant pitch first and then gradually narrowing pitch. In the melting and compression zone Z1, following parameters should be controlled to achieve complete melting of the solid phase resin while passing through the compression zone: temperature of the melting and compression zone Z1, RPM of the screw, a pitch P of the spiral screw, a screw length of the melting and compression zone Z1, and so on. In the melting and compression zone Z1, the length-to-diameter ratio of the spiral screw, e.g., 20 to 40, should be determined by accounting a material feeding rate, melt viscosity of the material, a conveying rate to the dispersion zone Z2, and so on.

Melt viscosity of the polymer composition, in which a polymer resin and clay are mixed together, may have a range of 2.0 to 5.0. Melt processibility may be poor when the viscosity is too low so it difficult to extrude the polymer composition using the continuous extruder. When the viscosity is too high, dispersion level in the dispersion zone Z2 of the continuous extruder may fluctuate. And flow in the dispersion zone Z2 or the metering zone Z3 may be too low, so does throughput.

The continuous extruder in accordance with a preferred embodiment of the present invention may further include a kneading zone Z4. The shaft 120 of the kneading zone Z4 may have a structure in which stair-like screws are formed in the direction perpendicular to the axis of the shaft 120, and repeated at predetermined pitches. For example, the first kneading disc S1, the second kneading disc S2 one-step higher than the first kneading disc, and the third kneading disc S3 one-step higher than the second kneading disc are formed in a stair-like shape to form screws, which are repeated at predetermined pitches. Moreover, the shaft 120 of the kneading zone Z4 can adopt a commonly-used kneading screw in addition to the stair-like screw. The molten material passed through the melting and compression zone Z1 is kneaded and blended in the kneading zone Z4.

The dispersion zone is a zone to achieve substantial mixing the molten material, e.g., a clay material in a polymer matrix resin, that passed through the melting and compression zone Z1, maintaining a certain temperature and pressure, and then to convey the material to the metering zone Z3. Shear stress induced by rotation of the shaft 120 exfoliates and disperses the material such as clay into the matrix polymer resin resulting in a discontinuous platelet shape. For example, the clay typically has a particle size of about 8µm. The clay described above are dispersed into smaller particles by the action of compression and shear stress in the dispersion zone Z2, and exfoliated into platelets of nano size (e.g., 10 to 300 nm). Since the clay has a layered structure, compression and shear stress act on the clay particle resulting in layer to layer separation, thus exfoliation. When the clay content is incorporated too much, the dispersed clay may have intercalated structure.

The dispersion zone Z2 has the shaft 120 of a structure including at least an upwardly-tapered compression section C1 and a straight shearing section C2 set next to the upwardly-tapered compression section. The dispersion zone Z2 may have a structure in which the straight shearing section C2, the upwardly-tapered compression section C1, and the straight shearing section C2 are sequentially configured.

Taper angle a1 of the upwardly-tapered compression section C1 may be set to 1 to 40°, depending on melt viscosity of the material, compression force, shear stress, flow rate, and so on. In the dispersion zone Z2, dispersion efficiency can be optimized by control of the compression and shearing actions of the shaft 120.

Decreasing the flow rate or increasing shear stress in the dispersion zone Z2, by narrowing the clearance between the cylinder 130 and the shaft 120, decreases conveying rate and throughput because of back pressure against material flow. When the clearance between the cylinder 130 and the shaft 120 in the dispersion zone Z2 is too narrow, the polymer resin may be burned out due to abrupt rise of temperature because the shaft 120 is continuously rotating at a certain speed while the molten polymer composition cannot move forward against the back pressure in the dispersion zone Z2 or the metering zone Z3. On the other hand, increasing the flow rate or decreasing shear stress in the dispersion zone Z2 by widening the clearance between the cylinder 130 and the shaft 120 increases conveying rate and throughput. The shearing stress should be controlled by adequate clearance between the cylinder 130 and the shaft 120, and in turn the clearance between the cylinder 130 and the shaft 120 should be set according to melt viscosity of the material, dispersion level, a flow rate, and so on. In a preferred embodiment of the present invention, the clearance between the cylinder 130 and the shaft 120 was set to 1/20 to 1/60 of the shaft diameter depending on shear stress, melt viscosity of the material, dispersion level, a flow rate, and so on. The clearance between the shaft 120 and the cylinder 130 for a straight shearing section, which is closest to the cylinder wall 130, greatly affects the dispersion level, and may be set to 1/40 to 1/60 of the shaft diameter. In the dispersion zone Z2, the length-to-diameter ratio of the shaft 120 is set to 20 to 60, depending on melt viscosity of the material, compression force, shear stress, dispersion level, a flow rate, and so on.

Meanwhile, the dispersion zone Z2 may have a stair-like structure in which the upwardly-tapered compression section C1 and the straight shearing section C2 are repeated more than once. Dispersion efficiency can be maximized by increasing the shear stress being built-up gradually along the stair-like structure in which the upwardly- tapered compression section C1 and the straight shearing section C2 are repeated more than once.

The straight shearing section C2 may have a shape in which variation of the shaft 120 diameter is within 5% or less.

In addition, the dispersion zone Z2 may further include a downwardly-tapered decompression section C3. Taper angle a2 of the downwardly-tapered decompression section C3 may be set to -1 to -40° (an angle measured in a clockwise direction is represented as "-"), depending on melt viscosity of the material, shear stress, a flow rate, and so on. In the dispersion zone Z2, dispersion efficiency can be maximized by control of compression, shearing, and decompression actions transferred by the shaft 120. The dispersion zone Z2 may have a structure in which the upwardly-tapered compression section C1, the straight shearing section C2, and the downwardly-tapered decompression section C3 are repeated more than once.

For side feeding, a side-feeding port 170 may be provided to supply secondary materials into the polymer composition during dispersion of the molten material in the cylinder 130. The secondary materials such as carbon fiber and glass fiber can be fed into the molten material through the side-feeding port 170 to obtain a polymer composition that the secondary materials are incorporated. When the secondary materials are supplied into the hopper 110, phase separation may occur due to differences in chemical structure, polarity, interfacial tension with respect to the primary material such as a polymer resin. When the secondary materials are incorporated into the molten material, wherein the primary materials already melt, through the side-feeding port 170, phase separation can be suppressed. In addition, the secondary materials such as carbon fiber and glass fiber are fed through the side-feeding port 170, improvement of electrical conductivity or mechanical properties of the composition may be achieved. More than one side-feeding port 170 may be provided. In order to supply the secondary materials through the side-feeding port 170 and blend the secondary materials, the shaft having a spiral screw shape may be provided.

The metering zone Z3 has a spiral screw shape to compress the dispersed composition in the dispersion zone Z2 and convey the composition to the extrusion die 160. Helix angle of the spiral screw may be set to 20 to 60, depending on a flow rate, viscosity of the composition, extrusion speed, and so on in the dispersion zone Z2. The clearance between a flight of the spiral screw and the cylinder wall 130 may be set to 1/40 to 1/60 of the diameter of the shaft in consideration of compression force, viscosity of the composition, a flow rate in the dispersion zone Z2, extrusion speed, and so on. Pitch of the spiral screw, e.g., 3 to 15cm, may be determined in consideration of compression force, viscosity of the composition, and so on. The dispersed composition in the dispersion zone Z2 is compressed by the spiral screw shaft 120, and conveyed to the extrusion die 160. The spiral screw may have constant pitch, or may have a structure in which the pitch is constant first, and then gradually reduced, or a structure in which the pitch is constant first and then gradually increased. The length-to-diameter ratio of the spiral screw in the metering zone Z3, e.g., 20 to 40, may be adequately determined in consideration of compression force, viscosity of the composition, extrusion speed, and so on.

The compressed composition in the metering zone Z3 is continuously discharged through the extrusion die 160. The extrusion die 160 hole, from which the composition is discharged, may have various shapes such as a circular shape, a rectangular shape, and so on. The polymer composition passed through the extrusion die 160 is quenched in a cooling apparatus such as a water bath, cut into pellets with a desired size, and dried to obtain the target composition. Temperature of the water bath may be maintained at a temperature (e.g., 40 °C or less) lower than a glass transition temperature of the polymer resin. Drying may be employed at a temperature of about 80 °C. The extrusion rate, e.g., 25 to 300 kg/h, may be determined, depending on viscosity of the polymer composition, flow rate, throughput in the metering zone Z3, and so on.

Hereinafter, a method of manufacturing a polyamide composition using the continuous twin-screw extruder in accordance with a preferred embodiment of the present invention will be described.

### [Example 1]

Clay having an average particle size of 8 µm was supplied into the hopper 110 of a continuous twin-screw extruder. The clay content was set from 0 to 15 % by weight while polyamide resin content was set from 85 to 100 % by weight such that the total content of a mixture reached 100 %.

In the melting and compression zone Z1 of the continuous twin-screw extruder, the polyamide resin and the clay were mixed, melted and compressed. Temperature of the melting zone was maintained at 250 °C by a heating unit. Two shafts 120 driven by a motor were rotated clockwise at the rotational speed of the shafts 120 of 230 RPM, and an axial distance between the two shafts was about 5 cm. The shaft 120 of the melting and compression zone Z1 had a spiral screw shape to mix and compress the materials fed through the hopper 110, and to convey the mixed and compressed materials into the dispersion zone Z2. The helix angle of the spiral screw was about 30°, the clearance between the flight of the spiral screw and the cylinder wall 130 was 1/60 of the diameter of the shaft. The pitch of the spiral screw was about 5 cm. The length-to-diameter ratio of the spiral screw in the melting and compression zone Z1 was 30.

The shafts 120 of the continuous twin-screw extruder were rotated clockwise to apply compression and shear stress to the molten material (in the cylinder 130) so that the clay was exfoliated into platelets, resulting in discrete clay platelets were dispersed uniformly in the polyamide resin. Temperatures of the dispersion zone Z2 of the continuous twin-screw extruder were set to 190 to 240 °C. The rotational speed of the shafts 120 was set to 230 RPM. The shaft 120 of the dispersion zone Z2 had a structure including an upwardly-tapered compression section C1, a shearing section C2 set next to the upwardly-tapered compression section, and a straight shearing section, and a downwardly-tapered decompression section C3. The taper angle a1 of the upwardly-tapered compression section was 20°. The taper angle a2 of the downwardly-tapered compression section was -20°. The clearance between the cylinder wall 130 and the shaft 120 was varied from 1/20 to 1/60 of the diameter of the shaft, and the clearance between the cylinder wall 130 and the shaft of a straight shearing section was 1/40 to 1/60 of the diameter of the shaft. The length-to-diameter ratio of the shaft 120 in the dispersion zone Z2 was 40.

In the metering zone Z3, the composition was discharged through the extrusion die 160 in the continuous twin-screw extruder while heating the composition at a temperature of 250 °C, which is higher than the temperature in the dispersion zone Z2. The shaft 120 of the metering zone Z3 had a spiral screw shape to compress the composition and convey the composition to the extrusion die 160. The helix angle of the spiral screw was -30°, the clearance between the flight of the spiral screw and the cylinder wall 130 was 1/60 of the diameter of the shaft. The spiral screw pitch was 5 cm. The length-to-diameter ratio of the spiral screw in the metering zone Z3 was 30.

The polymer composition discharged from the extrusion die 160, throughput of was 30 kg/h, was quenched in a water bath at 35 °C, and cut into a pellet form. Polyamide nanocomposite was dried at a temperature of 80 °C.

### [Example 2]

A polyamide resin, 78.0 to 98 % by weight, and clay having an average particle size of 8 µm, 2.0 % by weight, were supplied into the hopper 110 of the continuous twin-screw extruder.

In the continuous twin-screw extruder, the polyamide resin and the clay were melt-mixed and compressed at a temperature of 250 °C, which is higher than the melting temperature of the polyamide resin.

In addition, glass fiber, 0 to 25 % by weight, was fed into the polymer composition by side-feeding method while the polyamide resin and the clay were fed into the continuous twin-screw extruder wherein the clay was exfoliated and pre-dispersed in the polyamide resin.

The polyamide nanocomposite having a pellet form were obtained by the same procedure of processing as described Example 1, except that temperature in the dispersion zone Z2 was maintained at 240 °C.

### [Example 3]

A polyamide resin, 76.3 to 96.3 by weight, and clay having an average particle size of 8 µm, 1.7 % by weight, were supplied into the hopper 110 of the continuous twin-screw extruder.

The polyamide resin and the clay were melt-mixed and compressed at a temperature of 250 °C, which is higher than a melting temperature of the polyamide resin, in the continuous twin-screw extruder.

In addition, glass fiber, 0 to 20 % by weight, was fed into the polymer composition by side-feeding method while the polyamide resin and the clay were fed into the continuous twin-screw extruder wherein the clay was exfoliated and pre-dispersed in the polyamide resin.

The polyamide nanocomposite having a pellet form were obtained by the same procedure of processing as described Example 1, except that the temperature in the dispersion zone Z2 was maintained at 240 °C.

### [Example 4]

A polyamide resin, 72.0 to 92.0 by weight, clay having an average particle size of 8 µm, 2.0 % by weight, and carbon black, 6 % by weight, were supplied into the hopper 110 of the continuous twin-screw extruder.

The polyamide resin and the clay were melt-mixed and compressed at a temperature of 250 °C, which is higher than a melting temperature of the polyamide resin, in the continuous twin-screw extruder.

In addition, glass fiber, 0 to 20 % by weight, was fed into the polymer composition by side-feeding method while the polyamide resin and the clay were fed into the continuous twin-screw extruder wherein the clay was exfoliated and pre-dispersed in the polyamide resin.

The polyamide nanocomposite having a pellet form were obtained by the same procedure of processing as described Example 1, except that the temperature in the dispersion zone Z2 was maintained at 240 °C.

### [Example 5]

A polyamide resin, 73.0 to 78.0 by weight, and clay having an average particle size of 8 µm, 2.0 to 7.0% by weight were supplied into the hopper 110 of the continuous twin-screw extruder.

The polyamide resin and the clay were melt-mixed and compressed at a temperature of 250 °C, which is higher than a melting temperature of the polyamide resin, in the continuous twin-screw extruder.

In addition, glass fiber, 15 % by weight, and carbon fiber, 5 % by weight, were fed into the polymer composition by side-feeding method while the polyamide resin and the clay were fed into the continuous twin-screw extruder wherein the clay was exfoliated and pre-dispersed in the polyamide resin.

The polyamide nanocomposite having a pellet form were obtained by the same procedure of processing as described Example 1, except that the temperature in the dispersion zone Z2 was maintained at 240 °C.

Properties of the polyamide clay-based nanocomposites prepared as described above were measured by the following methods:
(1) Heat distortion temperature (HDT)
   According to ASTM D648, the temperature when the specimen arrived at 0.254 mm deformation was measured. The load of 18.6 kgf/cm² was applied to a specimen with heating rate of 2 °C/min.
(2) Flexural strength (FS) and flexural modulus (FM)
   According to ASTM D790, flexural strength (FS) and flexural modulus (FM) were measured at the cross head speed of 5mm/min.
(3) Tensile strength
   According to ASTM D638, tensile strength was measured at the cross head speed of 5mm/min under conditions of a temperature of 23±2 °C, a relative humidity of 50 %. Elongation was recorded as values at break points. Average value was used from the measurement of five specimens.
(4) Impact strength
   According to ASTM D256, impact strength corresponds to the value that energy of breaking a specimen is divided by unit thickness. The impact strength was measured by Izod notch method for a specimen having thickness of 1/8 inch. Average value was recorded from the measurement of five specimens at room temperature.
(5) Surface resistivity
   Surface resistivity per unit area was measured using an electrical ohm meter connected to a metal bus bar.

Table 1 below shows mechanical properties and thermal resistance as a function of clay content for the polyamide nanocomposite described in Example 1.

**[Table 1]**

| Properties | Clay content (wt%) | | | | | | | | | |
|---|---|---|---|---|---|---|---|---|---|---|
| | 0 | 0.5 | 1 | 1.5 | 2 | 5 | 7 | 10 | 12 | 15 |
| Flexural strength (kgf/cm²) | 1065 | 1141 | 1167 | 1180 | 1304 | 2418 | 2482 | 2374 | 2352 | 2368 |
| Flexural modulus (kgf/cm²) | 28781 | 30821 | 31350 | 32020 | 36238 | 41786 | 43898 | 47765 | 51747 | 50390 |
| Tensile strength (kgf/cm²) | 647 | 787 | 763 | 833 | 846 | 854 | 836 | 729 | 674 | 666 |
| Elongation (%) | 20 | 20 | 19 | 15 | 12 | 3.4 | 2.9 | 1.5 | 1.5 | 1.2 |
| Impact strength (kg.cm/cm) | 5.1 | 5 | 5 | 4.3 | 3.8 | 3 | 3 | 3 | 3 | 2.9 |
| Heat distortion temperature (°C) | 75 | 110 | 120 | 132 | 150 | 173 | 176 | 178 | 177 | 178 |

As shown in Table 1, the flexural strength for the polyamide nanocompsite was continuously enhanced by adding the clay content up to 15 % by weight whereas the flexural modulus was continuously increased up to clay content of 12 % by weight. The flexural strength was increased by 122% for the polyamide nanocomposite with the clay content of 15 % by weight as opposed to the polyamide composite with no clay added (when the content of the clay was 0 %). The flexural modulus was increased by 75 % for the polyamide nanocomposite with the clay content of 15 % by weight compared to the polyamide composite with no clay added (when the content of the clay was 0 %). While the impact strength for the nanocomposite of 1 % by weight or less clay content showed similar level of impact strength for the composite that clay was not incorporated, the impact strength for the nanocomposite was gradually decreased as the clay content was increased. The heat distortion temperature was improved as increasing the clay content. The heat distortion temperature was increased by 100 % for the nanocomposite of 2 % clay by weight as opposed to the polyamide composite with no clay added (when the content of the clay was 0 %).

In general, heat distortion temperature of pristine polyamide was 75 °C. As shown in Table 2, heat distortion temperature for the polyamide nanocomposite, wherein clay was discontinuously dispersed to platelet morphology, was improved with the range of 110 to 180 °C.

Table 2 summarizes mechanical properties and thermal resistance as a function of glass fiber content for the polyamide nanocomposite described in Example 2.

**[Table 2]**

| Properties | Contents of glass fiber (wt%) | | | | |
|---|---|---|---|---|---|
| | 0 | 10 | 15 | 20 | 25 |
| Flexural strength (kgf/cm²) | 1304 | 1497 | 1677 | 1790 | 1940 |
| Flexural modulus (kgf/cm ²) | 36238 | 55515 | 60897 | 66362 | 80375 |
| Tensile strength (kgf/cm ²) | 846 | 887 | 953 | 1090 | 1157 |
| Elongation (%) | 12 | 1.7 | 2 | 2.5 | 2.3 |
| Impact strength (kg.cm/cm) | 3.8 | 2.7 | 2.5 | 2.5 | 2.3 |
| Heat distortion temperature (°C) | 150 | 198 | 210 | 210 | 209 |

As shown in Table 2, the flexural strength and flexural modulus were increased as increasing the glass fiber content. The impact strength remained constant or slightly reduced as increasing the glass fiber content. The heat distortion temperature was substantially increased as increasing the glass fiber content, and that the heat distortion temperature was improved by about 165 % for the composite of 10 % glass fiber by weight. Note that the heat distortion temperature of the polyamide resin was 75 °C. Improvement in heat distortion temperature indicates that the polyamide nanocomposite of the present invention is thermal resistant so that it can be used in a high temperature environment. Note that the composite designated 0 % of glass fiber in Table 2 was the polyamide nanocomposite of the polyamide and 2 % by weight of clay.

It is clear in Table 2 that mechanical properties and heat resistance were enhanced when glass fiber was incorporated by a side-feeding method into the pre-dispersed composition in which the clay, after the polyamide resin and the clay being fed into the continuous twin-screw extruder, was exfoliated and dispersed in the polyamide resin

Table 3 summarizes mechanical properties and thermal resistance as a function of glass fiber content for the polyamide nanocomposite described in Example 3.

**[Table 3]**

| Properties | Contents of glass fiber (wt%) | | | |
|---|---|---|---|---|
| | 0 | 10 | 15 | 20 |
| Flexural strength (kgf/cm²) | 2352 | 2590 | 2756 | 2937 |
| Flexural modulus (kgf/cm²) | 33057 | 57559 | 64332 | 81778 |
| Tensile strength (kgf/cm²) | 714 | 901 | 921 | 947 |
| Elongation (%) | 2.5 | 1.6 | 1.6 | 1.7 |
| Impact strength (kg.cm/cm) | 3.7 | 2.7 | 3.1 | 3.0 |
| Heat distortion temperature (°C) | 169 | 203 | 206 | 209 |
| Surface resistivity (Ω·cm) | 5.E+06 | 6.E+05 | 2.E+05 | 9.E+04 |

As shown in Table 3, the flexural strength, flexural modulus, tensile strength, and heat distortion temperature were increased by adding the glass fiber. The highest heat distortion temperature, 209 °C, was noticed for the polyamide nanocomposite of 20 % by weight of glass fiber, which is 170 % improvement as compared to the heat distortion temperature of the polyamide resin, 75 °C. Improvement in heat distortion temperature indicates that the polyamide nanocomposite of the present invention can be used in industrial applications such as an automotive engine cover, an automotive fender, an automotive fuel filter housing, an air intake manifold (AIM), and others. The surface resistivity was 5x10⁶ Ω·cm for the polyamide composite that carbon nanotubes, 1.7 % by weight, were incorporated but without carbon fiber. The surface resistivity was gradually dropped as increasing the glass fiber content.

Table 4 shows the summary of mechanical properties and thermal resistance as a function of glass fiber content for the polyamide nanocomposite described in Example 4.

**[Table 4]**

| Properties | Contents of glass fiber (wt%) | | | |
|---|---|---|---|---|
| | 0 | 10 | 15 | 20 |
| Flexural strength (kgf/cm²) | 2234 | 2456 | 2887 | 3452 |
| Flexural modulus (kgf/cm²) | 34657 | 55341 | 60387 | 79347 |
| Tensile strength (kgf/cm²) | 770 | 880 | 895 | 850 |
| Elongation (%) | 3.0 | 1.2 | 1.3 | 1.0 |
| Impact strength (kg.cm/cm) | 3.5 | 3.0 | 2.9 | 2.5 |
| Heat distortion temperature (°C) | 212 | 214 | 215 | 217 |
| Surface resistivity (Ω·cm) | 4.E+04 | 4.E+02 | 4.E+01 | 3.E+01 |

In Table 4, it can be seen that, as increasing glass fiber content, the flexural strength, flexural modulus and heat distortion temperature were increased while the impact strength was slightly decreased. The surface resistivity was improved for the composite in which the glass fiber was incorporated as much as 10 % by weight or higher.

Note that, in Table 4, the polyamide nanocomposite composite designated as 0 % glass fiber represents the composition prepared with 92 % by weight of a polyamide resin, 2 % by weight of clay, 6 % by weight of carbon black.

Table 5 shows the summary of mechanical properties and thermal resistance as a function of clay content for the polyamide nanocomposite described in Example 5.

**[Table 5]**

| Properties | Contents of clay (wt%) | | |
|---|---|---|---|
| | 2 | 5 | 7 |
| Flexural strength (kgf/cm²) | 2110 | 2347 | 2776 |
| Flexural modulus (kgf/cm²) | 69943 | 73451 | 78456 |
| Tensile strength (kgf/cm²) | 1424 | 1544 | 1520 |
| Elongation (%) | 3.1 | 3.0 | 2.8 |
| Impact strength (kg.cm/cm) | 2.8 | 2.9 | 2.9 |
| Heat distortion temperature (°C) | 209 | 210 | 215 |
| Surface resistivity (Ω·cm) | 6.E+05 | 6.E+05 | 4.E+05 |

In Table 5, the flexural strength, flexural modulus and heat distortion temperature for the polyamide nanocomposites were gradually increased as increasing the clay content. Surface resistivity data showed the similar level in order of 10⁶ Ω·cm for the polyamide nanocomposites, which was less dependent on the clay content.

### [Industrial Applicability]

As described above, it is possible to provide a continuous extruder capable of performing in-situ mixing, melting, compression, dispersion and metering of a layered material such as clay without a separate additional extruder, and effectively exfoliating and dispersing the layered material into a polymer resin without additives such as a surfactant, a dispersing agent, an antioxidant, and a coupling agent.

## Claims

1. Continuous extruder, comprising:
a melting and compression zone (Z1) having a shaft structure (120) of a spiral screw shape, and configured to melt and compress polymer resin and other additive material that are fed through a hopper (110);
a dispersion zone (Z2) configured to convey the molten and compressed material to a metering zone (Z3) while dispersing the additive material into the polymer resin by the actions of compression and shear stress; and
an extrusion die (160) configured to discharge a polymer composition in which the additive material is dispersed into the polymer resin,
wherein the dispersion zone (Z2) has a shaft structure (120) including at least an upwardly-tapered compression section (C1) and a straight shearing section (C2) set next to the upwardly-tapered compression section,
**characterized in that**
the ratio of length-to-diameter of the shaft in the dispersion zone (Z2) ranges from 20 to 60, and **in that** the spiral screw shape has a constant pitch (P) first and then gradually narrowing pitch.

2. The continuous extruder according to claim 1, wherein a taper angle (a1) of the upwardly tapered compression section (C1) ranges from 1 ° to 40°.

3. The continuous extruder according to claim 1, wherein a clearance between a cylinder wall (130) and the tip of shaft (120) in the dispersion zone (Z2) ranges from 1/20 to 1/60 of the shaft diameter, or wherein a clearance between the cylinder wall and the tip of straight shearing section (C2) in the dispersion zone (Z2), which is closest to the cylinder wall (130), ranges from 1/40 to 1/60 of the diameter of the shaft (120).

4. The continuous extruder according to claim 1, wherein, in order to build up the shear stress gradually along the shaft (120), the shaft (120) in the dispersion zone (Z2) has a stair-like structure in which the upwardly-tapered compression section (C1) and the straight shearing section (C2) are repeated more than once.

5. The continuous extruder according to claim 1, wherein the shaft (120) in the dispersion zone (Z2) further comprises a straight shearing section (C2) before the upwardly-tapered compression section (C1) such that the shaft (120) is configured in order of the straight shearing section (C2), the upwardly-tapered compression section (C1), and the straight shearing section (C2).

6. The continuous extruder according to claim 1, wherein the diameter of the shaft (120) in the straight shearing section (C2) deviates 5% or less.

7. The continuous extruder according to claim 1, wherein the shaft (120) in the dispersion zone (Z2) further comprises a downwardly-tapered decompression section (C3) such that the shaft (120) is configured in order of the upwardly-tapered compression section (C1), the straight shearing section (C2), and the downwardly-tapered decompression section (C3).

8. The continuous extruder according to claim 7, wherein a taper angle (a2) of the downwardly-tapered decompression section (C3) ranges from -1° to -40°.

9. The continuous extruder according to claim 1, wherein the shaft (120) in the dispersion zone (Z2) further comprises a straight shearing section (C2) set before the upwardly-tapered compression section (C3) or after a downwardly-tapered decompression section (C3).

10. The continuous extruder according to claim 1, wherein the shaft (120) in the dispersion zone (Z2) further comprises a downwardly-tapered decompression section (C3) such that the shaft (120) is configured with more than one repetition of the upwardly-tapered compression section (C1), the straight shearing section (C2), and the downwardly-tapered decompression section (C3).

11. The continuous extruder according to claim 1, wherein the length-to-diameter ratio of the spiral screw in the melting and compression zone (Z1) ranges from 20 to 40, or wherein a helix angle of the spiral screw in the melting and compression zone (Z1) ranges from 20° to 60°, a clearance between a flight of the spiral screw and the cylinder wall (130) ranges from 1/40 to 1/60 of the diameter of the shaft (120), and a pitch of the spiral screw ranges from 3 cm to 15 cm.

12. The continuous extruder according to claim 1, further comprising a metering zone (Z3) having a shaft structure of a spiral screw shape, which is configured to discharge a dispersed polymer composition to the extrusion die (160).

13. The continuous extruder according to claim 12, wherein the length-to-diameter ratio of the spiral screw in the metering zone (Z3) ranges from 20 to 40, or wherein a helix angle of the spiral screw in the metering zone (Z3) ranges from 20° to 60°, a clearance between a flight of the spiral screw and the cylinder wall (130) in the metering zone (Z3) ranges from 1/40 to 1/60 of the diameter of the shaft (120), and a pitch of the spiral screw in the metering zone (Z3) ranges from 3 cm to 15 cm.

14. The continuous extruder according to claim 1, further comprising a kneading zone (Z4) having a stair-like screw formed in the direction perpendicular to the axis of the shaft (120), and having a structure in which the stair-like screw is repeated at a predetermined pitch, or further comprising a side-feeding port (170) set to feed a secondary material by a side-feeding method into a polymer composition melt in the dispersion zone (Z2) that is compressed during mixing.

15. The continuous extruder according to claim 14, wherein the kneading zone (Z4) is formed of a screw in which a first kneading disc element (S1), a second kneading disc element (S2) one step higher than the first kneading disc element (S1), and a third kneading disc element (S3) one step higher than the second kneading disc element (S2) are set in a stair-like shape, and the screw is repeated at a predetermined pitch.

## Patentansprüche

1. Kontinuierlicher Extruder, umfassend:
eine Schmelz- und Kompressionszone (Z1), die eine Wellenstruktur (120) einer Spiralschneckenform hat und ausgestaltet ist, um Polymerharz und anderes Zusatzmaterial zu schmelzen und zu komprimieren, die durch einen Trichter (110) zugeführt werden,
eine Dispersionszone (Z2), die ausgestaltet ist, um das geschmolzene und komprimierte Material zu einer Dosierzone (Z3) zu fördern, während das Zusatzmaterial in das Polymerharz durch die Wirkungen von Kompression und Scherspannung dispergiert wird, und
eine Extrusionsdüse (160), die ausgestaltet ist, um eine Polymerzusammensetzung abzuführen, in der das Zusatzmaterial in das Polymerharz dispergiert ist,
wobei die Dispersionszone (Z2) eine Wellenstruktur (120) hat, die mindestens einen sich nach oben verjüngenden Kompressionsabschnitt (C1) und einen geraden Scherabschnitt (C2) aufweist, der neben dem sich nach oben verjüngenden Kompressionsabschnitt angeordnet ist,
**dadurch gekennzeichnet, dass**
das Verhältnis von Länge zu Durchmesser der Welle in der Dispersionszone (Z2) in einem Bereich von 20 bis 60 liegt und dass die Spiralschneckenform erst eine konstante Steigung (P) und dann eine sich graduell verengende Steigung hat.

2. Kontinuierlicher Extruder nach Anspruch 1, wobei ein Verjüngungswinkel (a1) des sich nach oben verjüngenden Kompressionsabschnitts (C1) in einem Bereich von 1° bis 40° liegt.

3. Kontinuierlicher Extruder nach Anspruch 1, wobei ein Abstand zwischen einer Zylinderwand (130) und dem Ende der Welle (120) in der Dispersionszone (Z2) in einem Bereich von 1/20 bis 1/60 des Wellendurchmesser liegt oder wobei ein Abstand zwischen der Zylinderwand und dem Ende des geraden Scherabschnitts (C2) in der Dispersionszone (Z2), das am nächsten zu der Zylinderwand (130) ist, in einem Bereich von 1/40 bis 1/60 des Durchmessers der Welle (120) liegt.

4. Kontinuierlicher Extruder nach Anspruch 1, wobei, um die Scherspannung graduell entlang der Welle (120) aufzubauen, die Welle (120) in der Dispersionszone (Z2) eine stufenartige Struktur hat, bei der sich der sich nach oben verjüngende Kompressionsabschnitt (C1) und der gerade Scherabschnitt (C2) mehr als einmal wiederholen.

5. Kontinuierlicher Extruder nach Anspruch 1, wobei die Welle (120) in der Dispersionszone (Z2) ferner einen geraden Scherabschnitt (C2) vor dem sich nach oben verjüngenden Kompressionsabschnitt (C1) derart umfasst, dass die Welle (120) in der Reihenfolge des geraden Scherabschnitts (C2), des sich nach oben verjüngenden Kompressionsabschnitts (C1) und des geraden Scherabschnitts (C2) ausgestaltet ist.

6. Kontinuierlicher Extruder nach Anspruch 1, wobei der Durchmesser der Welle (120) in dem geraden Scherabschnitt (C2) um 5 % oder weniger abweicht.

7. Kontinuierlicher Extruder nach Anspruch 1, wobei die Welle (120) in der Dispersionszone (Z2) ferner einen sich nach unten verjüngenden Dekompressionsabschnitt (C3) derart umfasst, dass die Welle (120) in der Reihenfolge des sich nach oben verjüngenden Kompressionsabschnitts (C1), des geraden Scherabschnitts (C2) und des sich nach unten verjüngenden Dekompressionsabschnitts (C3) ausgestaltet ist.

8. Kontinuierlicher Extruder nach Anspruch 7, wobei der Verjüngungswinkel (a2) des sich nach unten verjüngenden Dekompressionsabschnitts (C3) in einem Bereich von -1° bis -40° liegt.

9. Kontinuierlicher Extruder nach Anspruch 1, wobei die Welle (120) in der Dispersionszone (Z2) ferner einen geraden Scherabschnitt (C2) umfasst, der vor dem sich nach oben verjüngenden Kompressionsabschnitt (C3) oder nach einem sich nach unten verjüngenden Dekompressionsabschnitt (C3) angeordnet ist.

10. Kontinuierlicher Extruder nach Anspruch 1, wobei die Welle (120) in der Dispersionszone (Z2) ferner einen sich nach unten verjüngenden Dekompressionsabschnitt (C3) derart umfasst, dass die Welle (120) mit mehr als einer Wiederholung des sich nach oben verjüngenden Kompressionsabschnitts (C1), des geraden Scherabschnitts (C2) und des sich nach unten verjüngenden Dekompressionsabschnitts (C3) ausgestaltet ist.

11. Kontinuierlicher Extruder nach Anspruch 1, wobei das Länge-zu-Durchmesser-Verhältnis der Spiralschnecke in der Schmelz- und Kompressionszone (Z1) in einem Bereich von 20 bis 40 liegt oder wobei ein Schrägungswinkel der Spiralschnecke in der Schmelz- und Kompressionszone (Z1) in einem Bereich von 20° bis 60° liegt, ein Abstand zwischen einem Gang der Spiralschnecke und der Zylinderwand (130) in einem Bereich von 1/40 bis 1/60 des Durchmessers der Welle (120) liegt und eine Steigung der Spiralschnecke in einem Bereich von 3 cm bis 15 cm liegt.

12. Kontinuierlicher Extruder nach Anspruch 1, der ferner eine Dosierzone (Z3) umfasst, die eine Wellenstruktur einer Spiralschneckenform hat, die ausgestaltet ist, um eine dispergierte Polymerzusammensetzung an die Extrusionsdüse (160) abzuführen.

13. Kontinuierlicher Extruder nach Anspruch 12, wobei das Länge-zu-Durchmesser-Verhältnis der Spiralschnecke in der Dosierzone (Z3) in einem Bereich von 20 bis 40 liegt oder wobei ein Schrägungswinkel der Spiralschnecke in der Dosierzone (Z3) in einem Bereich von 20° bis 60° liegt, ein Abstand zwischen einem Gang der Spiralschnecke und der Zylinderwand (130) in der Dosierzone (Z3) in einem Bereich von 1/40 bis 1/60 des Durchmessers der Welle (120) liegt und eine Steigung der Spiralschnecke in der Dosierzone (Z3) in einem Bereich von 3 cm bis 15 cm liegt.

14. Kontinuierlicher Extruder nach Anspruch 1, der ferner eine Knetzone (Z4) umfasst, die eine stufenartige Schnecke hat, die in die Richtung senkrecht zu der Achse der Welle (120) gebildet ist, und eine Struktur hat, bei sich der die stufenartige Schnecke an einer vorbestimmten Steigung wiederholt, oder ferner einen Seitenzuführanschluss (170) umfasst, der angeordnet ist, um ein sekundäres Material durch ein Seitenzuführverfahren in eine Polymerzusammensetzung zuzuführen, die in der Dispersionszone (Z1) geschmolzen wird, das während eines Mischens komprimiert wird.

15. Kontinuierlicher Extruder nach Anspruch 14, wobei die Knetzone (Z4) aus einer Schnecke gebildet ist, in der ein erstes Knetscheibenelement (S1), ein zweites Knetscheibenelement (S2) eine Stufe höher als das erste Knetscheibenelement (S1) und ein drittes Knetscheibenelement (S3) eine Stufe höher als das zweite Knetscheibenelement (S2) in einer stufenartigen Form angeordnet sind und sich die Schnecke an einer vorbestimmten Steigung wiederholt.

## Revendications

1. Extrudeuse continue, comprenant :
une zone de fusion et de compression (Z1) possédant une structure d'arbre (120) en forme de vis sans fin, et conçue pour faire fondre et comprimer une résine polymère et un autre matériau additif qui sont introduits par une trémie (110) ;
une zone de dispersion (Z2) conçue pour acheminer le matériau fondu et comprimé vers une zone de dosage (Z3) tout en dispersant le matériau additif dans la résine polymère sous l'effet d'une contrainte de compression et
de cisaillement ; et
une filière d'extrusion (160) conçue pour débiter une composition polymère dans laquelle le matériau additif est dispersé dans la résine polymère,
dans laquelle la zone de dispersion (Z2) possède une structure d'arbre (120) comportant au moins une section de compression conique vers le haut (C1) et une section droite de cisaillement (C2) placée à côté de la section de compression conique vers le haut, **caractérisée en ce que** :
le rapport longueur/diamètre de l'arbre dans la zone de dispersion (Z2) est compris entre 20 et 60, et **en ce que** la forme de vis sans fin présente d'abord un pas constant (P), puis un pas devenant progressivement plus étroit.

2. Extrudeuse continue selon la revendication 1, dans laquelle un angle de conicité (a1) de la section de compression conique vers le haut (C1) est compris entre 1° et 40°.

3. Extrudeuse continue selon la revendication 1, dans laquelle un jeu entre une paroi de cylindre (130) et l'extrémité de l'arbre (120) dans la zone de dispersion (Z2) est compris entre 1/20 et 1/60 du diamètre de l'arbre, ou dans laquelle un jeu entre la paroi de cylindre et l'extrémité de la section droite de cisaillement (C2) dans la zone de dispersion (Z2) qui est la plus proche de la paroi de cylindre (130), est compris entre 1/40 et 1/60 du diamètre de l'arbre (120).

4. Extrudeuse continue selon la revendication 1, dans laquelle, afin d'accumuler progressivement la contrainte de cisaillement le long de l'arbre (120), l'arbre (120) dans la zone de dispersion (Z2) possède une structure en forme d'escalier dans laquelle la section de compression conique vers le haut (C1) et la section droite de cisaillement (C2) se répètent plus d'une fois.

5. Extrudeuse continue selon la revendication 1, dans laquelle l'arbre (120) dans la zone de dispersion (Z2) comprend en outre une section droite de cisaillement (C2) avant la section de compression conique vers le haut (C1), de sorte que l'arbre (120) est conçu dans l'ordre suivant : la section droite de cisaillement (C2), la section de compression conique vers le haut (C1) et la section droite de cisaillement (C2).

6. Extrudeuse continue selon la revendication 1, dans laquelle le diamètre de l'arbre (120) dans la section droite de cisaillement (C2) varie d'au plus 5 %.

7. Extrudeuse continue selon la revendication 1, dans laquelle l'arbre (120) dans la zone de dispersion (Z2) comprend en outre une section de décompression conique vers le bas (C3), de sorte que l'arbre (120) est conçu dans l'ordre suivant : la section de compression conique vers le haut (C1), la section droite de cisaillement (C2) et la section de décompression conique vers le bas (C3).

8. Extrudeuse continue selon la revendication 7, dans laquelle un angle de conicité (a2) de la section de décompression conique vers le bas (C3) est compris entre -1° et -40°.

9. Extrudeuse continue selon la revendication 1, dans laquelle l'arbre (120) dans la zone de dispersion (Z2) comprend en outre une section droite de cisaillement (C2), placée avant la section de compression conique vers le haut (C3) ou après une section de décompression conique vers le bas (C3).

10. Extrudeuse continue selon la revendication 1, dans laquelle l'arbre (120) dans la zone de dispersion (Z2) comprend en outre une section de décompression conique vers le bas (C3), de sorte que l'arbre (120) est conçu avec plusieurs répétitions de la section de compression conique vers le haut (C1), la section droite de cisaillement (C2) et la section de décompression conique vers le bas (C3).

11. Extrudeuse continue selon la revendication 1, dans laquelle le rapport longueur/diamètre de la vis sans fin dans la zone de fusion et de compression (Z1) est compris entre 20 et 40, ou dans laquelle un angle d'hélice de la vis sans fin dans la zone de fusion et de compression (Z1) est compris entre 20° et 60°, un jeu entre un filet de la vis sans fin et la paroi de cylindre (130) est compris entre 1/40 et 1/60 du diamètre de l'arbre (120), et un pas de la vis sans fin est compris entre 3 cm et 15 cm.

12. Extrudeuse continue selon la revendication 1, comprenant en outre une zone de dosage (Z3) possédant une structure d'arbre en forme de vis sans fin, qui est conçue pour débiter une composition polymère dispersée, sur la filière d'extrusion (160).

13. Extrudeuse continue selon la revendication 12, dans laquelle le rapport longueur/diamètre de la vis sans fin dans la zone de dosage (Z3) est compris entre 20 et 40, ou dans laquelle un angle d'hélice de la vis sans fin dans la zone de dosage (Z3) est compris entre 20° et 60°, un jeu entre un filet de la vis sans fin et la paroi de cylindre (130) dans la zone de dosage (Z3) est compris entre 1/40 et 1/60 du diamètre de l'arbre (120), et un pas de la vis sans fin dans la zone de dosage (Z3) est compris entre 3 cm et 15 cm.

14. Extrudeuse continue selon la revendication 1, comprenant en outre une zone de malaxage (Z4) comportant une vis en forme d'escalier, formée dans la direction perpendiculaire à l'axe de l'arbre (120), et possédant une structure dans laquelle la vis en forme d'escalier se répète à un pas prédéterminé, ou comprenant en outre un orifice d'alimentation latérale (170) ménagé pour introduire un matériau secondaire au moyen d'un procédé d'alimentation latérale dans une composition polymère en fusion dans la zone de dispersion (Z2), qui est comprimée au cours du mélange.

15. Extrudeuse continue selon la revendication 14, dans laquelle la zone de malaxage (Z4) est constituée d'une vis dans laquelle un premier élément de disque de malaxage (S1), un deuxième élément de disque de malaxage (S2) un degré plus haut que le premier élément de disque de malaxage (S1), et un troisième élément de disque de malaxage (S3) un degré plus haut que le deuxième élément de disque de malaxage (S2) sont placés selon une forme en escalier, et la vis se répète à un pas prédéterminé.
